# FASCICULE DE BREVET EUROPEEN

(11) **EP 3 182 097 B1**
(45) Date de publication et mention de la délivrance du brevet: **25.11.2020**
(21) Numéro de dépôt: 16204117.2
(22) Date de dépôt: 14.12.2016
(51) Int. Cl.: G01N 21/47, G01N 21/84

(54) **DISPOSITIF DE CONTRÔLE PAR TOMOGRAPHIE EN COHÉRENCE OPTIQUE NOTAMMENT DANS UN CONGÉ D'UNE PIÈCE COMPOSITE**
VORRICHTUNG ZUR KONTROLLE DURCH OPTISCHE KOHÄRENZTOMOGRAPHIE, INSBESONDERE IN EINER AUSKEHLUNG EINES VERBUNDSTOFFTEILS
DEVICE FOR TESTING BY OPTICAL COHERENCE TOMOGRAPHY, IN PARTICULAR IN A FILLET OF A COMPOSITE PART

(30) Priorité: 14.12.2015 FR 1562272
(43) Date de publication de la demande: 21.06.2017
(73) Titulaire: AIRBUS (SAS), 31700 Blagnac (FR)
(72) Inventeur: CAMPAGNE, Benjamin, 44800 Saint Herblain (FR); LE PINRU, Louis, 44400 REZE (FR); BOSQUET, Catherine, 44240 SUCE SUR ERDRE (FR)
(74) Mandataire: Gicquel, Olivier Yves Gérard

(56) Documents cités:
- EP-A2- 2 851 681
- WO-A1-2014/102055
- FR-A1- 2 988 476
- FR-A1- 2 988 478

## Description

### DOMAINE TECHNIQUE DE L'INVENTION

Le domaine de l'invention est celui du contrôle non destructif.

Plus précisément, l'invention concerne un dispositif de contrôle par tomographie en cohérence optique (OCT) notamment dans un congé d'une pièce composite.

L'invention trouve des applications dans le domaine de l'aéronautique et, en particulier, dans le domaine du contrôle de pièces aéronautiques avant montage de l'aéronef.

### ÉTAT DE LA TECHNIQUE

Il est connu de l'art antérieur un dispositif de contrôle non destructif de la santé matière par tomographie en cohérence optique, apte à détecter et à caractériser des ondulations de résine sur une pièce constituée d'un matériau composite.

Ce dispositif, décrit dans le brevet français FR 2 988 478, comprend une tête de mesure OCT et un robot manipulateur apte à déplacer la tête de mesure dans l'espace.

Ce robot manipulateur est piloté par des moyens informatiques dans lesquels sont rentrés préalablement la topographie de la pièce à contrôler.

L'inconvénient majeur de ce dispositif est que le robot manipulateur présente un rayon d'action restreint par la taille de son bras. Compte-tenu de la masse importante du robot manipulateur, le dispositif est difficilement déplaçable dans un atelier. Il est alors nécessaire de déplacer la structure composite afin de pouvoir la contrôler entièrement. Cette opération est longue car elle nécessite de recaler le dispositif par rapport à la nouvelle position de la structure. Cette technique est donc peu adaptée au contrôle d'une structure composite de grandes dimensions.

D'autre part, ce dispositif présentant un robot manipulateur de grande taille, est peu adapté à contrôler l'intérieur d'une structure telle qu'un caisson.

Les documents EP2851681A2 et WO2014/102055A1 décrivent des dispositifs de contrôle non destructif comprenant des capteurs ultrasoniques.

Aucun des systèmes actuels ne permet de répondre simultanément à tous les besoins requis, à savoir de proposer un dispositif de contrôle non destructif par tomographie en cohérence optique (OCT) qui soit compacte, fiable et pouvant être facilement déplacé par un opérateur.

### OBJET DE L'INVENTION

La présente invention vise à remédier à tout ou partie des inconvénients de l'état de la technique cités ci-dessus.

A cet effet, la présente invention vise un dispositif de contrôle non destructif d'un congé d'une pièce en matériaux composites comportant des fibres organisées en plis maintenus dans une matrice organique polymérisée. La pièce comprend deux faces formant un dièdre, les deux faces étant reliées par ledit congé. Le dispositif de contrôle comprend un capteur de mesure par tomographie en cohérence optique (OCT) maintenu par un support venant prendre appui, grâce à des moyens d'appui, simultanément sur les deux faces du dièdre lors du contrôle du congé.

Les plis de la pièce contrôlée par le dispositif objet de l'invention peuvent être constitués de tissus ou de nappes unidirectionnelles ou de non tissés multidirectionnels de fibres continues de carbone, de verre ou d'aramide. La matrice organique peut être de nature thermodurcissable telle qu'une résine époxyde polymérisée ou de nature thermoplastique. La pièce est obtenue par tout procédé connu de l'homme du métier, à partir de plis secs ou pré-imprégnés. La pièce peut être un élément d'une structure aéronautique comme par exemple un panneau de voilure ou un caisson.

Un capteur de mesure par tomographie en cohérence optique (OCT suivant l'acronyme anglais « *Optical Coherent Tomography* ») est basé sur la mise en œuvre d'une technique interférométrique à faible cohérence optique. Le capteur, comprenant généralement un objectif, permet d'obtenir en temps réel une coupe transversale 2D, également appelée B-SCAN, de la matrice organique polymérisée. En translatant le dispositif le long du congé, l'opérateur obtient alors une image 3D du congé à contrôler.

Le dispositif objet de l'invention permet ainsi d'obtenir le profil du congé correspondant à l'interface entre la matrice organique et l'air. Le dispositif permet également de mesurer l'épaisseur de matrice organique traversée dont l'indice de réfraction est connu à la longueur d'onde du capteur. Le dispositif permet ainsi de détecter une surépaisseur de matrice organique traduisant la présence de plissements ou d'ondulations qui peuvent dégrader les propriétés mécaniques de la pièce composite.

Selon l'invention, le dispositif de contrôle comprend également des moyens de réglage d'une distance d'un point de référence du capteur par rapport à un bord du support et des moyens de réglage d'une orientation des moyens d'appui par rapport au support. Le support comprend un ensemble de patins, ou de roues, destinés à glisser, ou à rouler, simultanément sur les deux faces du dièdre, le support s'étendant symétriquement par rapport à un axe médian du support, ledit axe médian étant maintenu orienté sensiblement dans un plan bissecteur du dièdre lors du contrôle du congé.

Ainsi, l'opérateur peut régler la position relative du capteur par rapport au congé à contrôler entre une surface de la pièce, par exemple une surface d'un panneau et une autre surface de la pièce, formant un angle avec la première surface, par exemple un raidisseur de la pièce. L'objectif du capteur peut ainsi être positionné sur la pièce de telle sorte que le centre du congé soit apte à être situé sensiblement dans l'axe optique de l'objectif et à une distance adaptée à la distance focale de l'objectif qui peut être interchangeable.

L'invention se réfère à un dispositif de contrôle non destructif d'un congé d'une pièce en matériaux composites comportant des fibres organisées en plis maintenus dans une matrice organique polymérisée, ladite pièce comprenant deux faces formant un dièdre, lesdites faces étant reliées par ledit congé, ledit dispositif de contrôle comprenant un capteur de mesure par tomographie en cohérence optique (OCT), comprenant un axe optique et un berceau, ledit capteur étant maintenu par un support comprenant deux plaques, chacune des plaques comprenant une glissière, ledit support venant prendre appui simultanément sur les deux faces dudit dièdre, par des moyens d'appui, lors du contrôle dudit congé, ledit dispositif de contrôle comprenant également des moyens de réglage d'une distance d'un point de référence dudit capteur par rapport à un bord dudit support, lesdits moyens de réglage de distance comprenant de glissières, dans chacune desquelles est inséré un téton se dressant en saillie la surface externe du berceau, et des moyens de réglage d'une orientation desdits moyens d'appui par rapport audit support, et ledit support comprenant un ensemble de patins, ou de roues, destinés à glisser, ou à rouler, simultanément sur les deux faces dudit dièdre, ledit support s'étendant symétriquement par rapport à un axe médian dudit support, ledit axe médian étant maintenu orienté sensiblement dans un plan bissecteur dudit dièdre lors du contrôle dudit congé. Dans un tel dispositif, ledit capteur pivote dans ledit support autour d'un axe de rotation, perpendiculaire audit axe médian et formé par lesdits tétons, l'axe optique dudit capteur formant un angle avec un plan bissecteur dudit dièdre lors du contrôle dudit congé, en ce que lesdits moyens de réglage d'une orientation desdits moyens d'appui comprennent deux pieds reliés chacun audit support par une jambe en liaison pivot par rapport audit support, et en ce que lesdits moyens de réglage d'une orientation desdits moyens d'appui comprennent des moyens de réglage d'une orientation desdits pieds par rapport audit support.

Ainsi, le support comprend deux pieds d'appui excentrés dont l'inclinaison peut se régler.

A cet effet, l'orientation de chacun des pieds est réglée par un bras en liaison pivot par rapport au pied et en liaison pivot glissant par rapport au support.

Dans l'invention, les moyens de réglage de la hauteur s'effectuent par glissement du capteur par rapport audit support.

Dans un mode de réalisation particulier de l'invention, le dispositif de contrôle non destructif comprend des moyens de verrouillage de la hauteur du capteur sur le support.

Ainsi, le réglage de la position du capteur sur le support est stable lors des opérations de contrôle d'un congé.

Dans l'invention, le capteur pivote dans le support autour d'un axe perpendiculaire à l'axe médian, l'axe optique du capteur formant un angle avec un plan bissecteur du dièdre lors du contrôle du congé.

Ainsi, un balayage transversal peut être réalisé par un opérateur, permettant ainsi de contrôler des zones du congé qui sont hors du champ de l'objectif lorsque l'axe optique est confondu avec ledit axe médian du support.

Dans un mode de réalisation particulier de l'invention, chacun des bras comprend une suspension.

Ainsi, le dispositif est adapté pour contrôler des pièces présentant des aspérités.

Dans un mode de réalisation particulier de l'invention, chacun des pieds forme un angle dont la valeur peut être ajustée entre 40° et 90° avec ledit axe médian du support.

Ainsi, le support est adapté pour réaliser des mesures sur des congés de raccordement de surfaces formants des angles différents.

Dans un mode de réalisation particulier de l'invention, le dispositif de contrôle comprend des moyens de verrouillage de l'orientation des moyens d'appui par rapport au support.

Ainsi, les appuis du support étant stables, un opérateur peut manipuler le support tout en le plaquant contre les parois de part et d'autre du congé à contrôler.

Dans un mode de réalisation particulier de l'invention, les pieds comprennent des moyens de glissement sur une surface.

Ainsi, l'opérateur peut faire glisser le dispositif sur les parois.

Dans un mode de réalisation particulier de l'invention, les moyens de glissement comprennent des patins.

Ces patins sont réalisés en polytétrafluoroéthylène (PTFE) ou en tout autres matériaux présentant une très faible adhérence pour faciliter le glissement et pour éviter une agression mécanique des surfaces des pièces contrôlées.

Dans un mode de réalisation particulier de l'invention, les pieds comprennent des moyens de roulement.

Ainsi, les pieds présentent des moyens de roulement pouvant être des roues à axe fixe ou pivotant, voire des roues holonomes.

L'invention vise également un dispositif automatique de contrôle non destructif comprenant au moins un dispositif de contrôle non destructif, logé dans un chariot comprenant des moyens automatisés de déplacement le long d'un raidisseur d'une pièce composite, ledit chariot chevauchant le raidisseur.

Ainsi, un chariot automatisé permet de déplacer le dispositif de contrôle non destructif en étant guidé par la topographie du raidisseur. Le dispositif automatisé peut alors contrôler de manière autonome une pièce de grande envergure, comme par exemple des panneaux de grande longueur, ou une pièce logée à l'intérieur d'une structure peu accessible par un opérateur, comme par exemple une structure fermée de type caisson.

### BRÈVE DESCRIPTION DES FIGURES

D'autres avantages, buts et caractéristiques particulières de la présente invention ressortiront de la description non limitative qui suit d'au moins un mode de réalisation particulier des dispositifs objets de la présente invention, en regard des dessins annexés, dans lesquels :

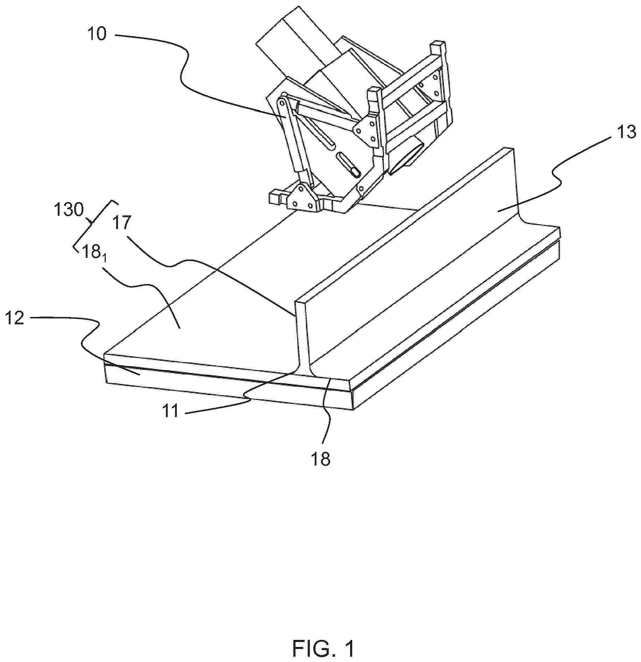

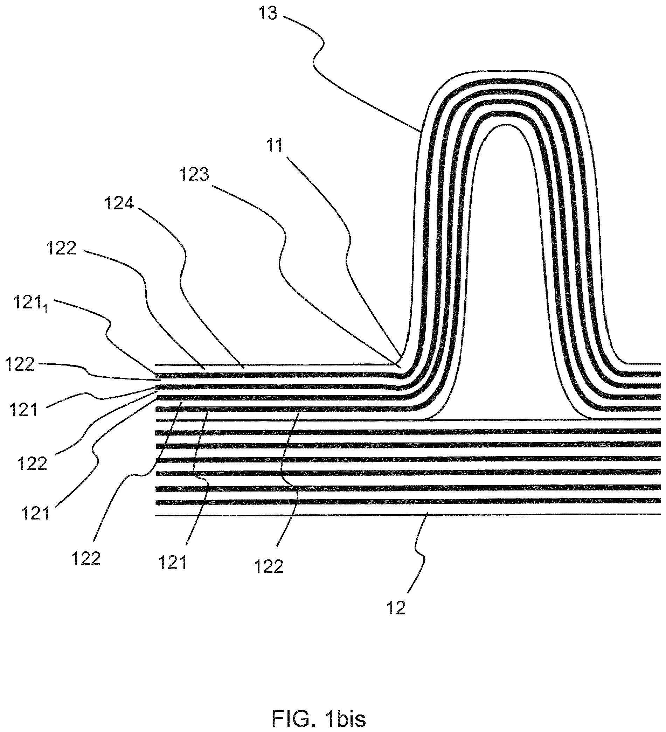

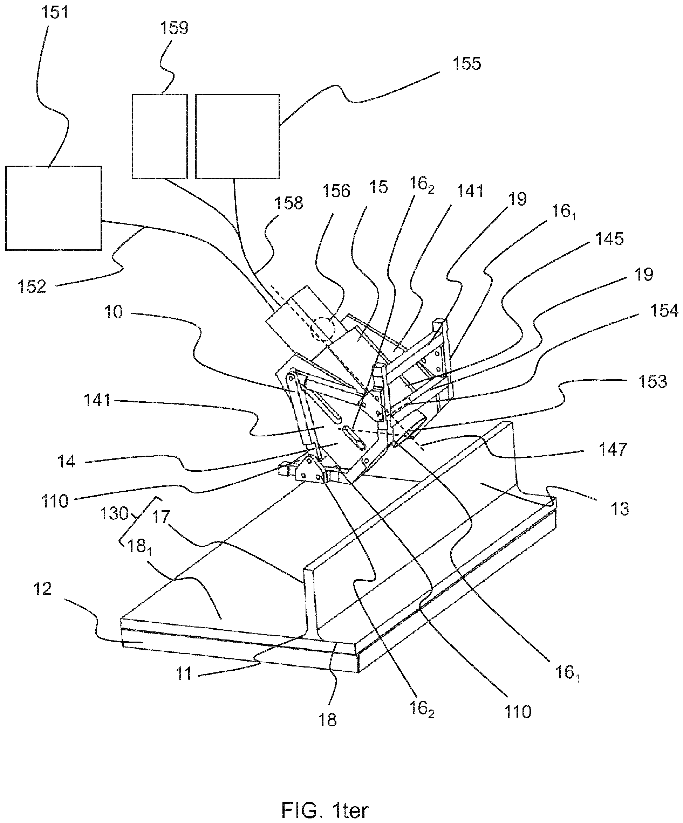

- la figure 1 représente une vue en perspective d'un mode de réalisation d'un dispositif de contrôle non destructif selon l'invention destiné à contrôler un congé entre deux faces perpendiculaires d'une pièce composite ;
- la figure 1bis représente une vue en section de la pièce composite comportant un congé défini par deux surfaces de la pièce, les deux surfaces formant un dièdre ;
- la figure 1ter représente un système de contrôle comportant le dispositif de contrôle en référence à la figure 1 ;
- la figure 2 représente une vue en perspective du dispositif de contrôle en référence à la figure 1 ;
- la figure 3 représente une vue de côté du dispositif de contrôle en référence à la figure 1, configuré pour un contrôle entre deux surfaces déterminant un angle sensiblement plat ;
- la figure 4 représente une vue de côté du dispositif de contrôle lors du contrôle du congé du raidisseur en référence à la figure 1 ;
- la figure 5 représente une vue de côté d'un mode de réalisation d'un dispositif automatisé de contrôle non destructif selon l'invention ;
- la figure 6 représente une vue de côté d'un autre mode de réalisation d'un dispositif automatisé de contrôle non destructif selon l'invention comportant deux capteurs optiques et adapté au contrôle simultané des deux congés de raccordement d'un raidisseur d'une pièce en matériau composite.

### DESCRIPTION DÉTAILLÉE DE MODES DE RÉALISATION DE L'INVENTION

La présente description est donnée à titre non limitatif, chaque caractéristique d'un mode de réalisation pouvant être combinée à toute autre caractéristique de tout autre mode de réalisation de manière avantageuse.

On note, dès à présent, que les figures ne sont pas à l'échelle.

La description détaillée est présentée dans le cadre d'une application au contrôle du congé formé par un raidisseur d'un panneau en structure composite, une âme du raidisseur étant sensiblement perpendiculaire à une surface du panneau. L'application à une telle structure n'est utilisée qu'à titre d'exemple et ne doit pas être interprété comme une limitation.

La figure 1 représente une vue en perspective du dispositif 10 de contrôle non destructif par tomographie en cohérence optique (OCT) utilisé par un opérateur pour contrôler un congé 11 d'un raidisseur 13 ayant sensiblement la forme d'un profilé oméga dont les deux ailes 18 sont collées sur un panneau 12. Le dispositif 10 permet de contrôler l'état matière du congé 11 reliant une aile 18₁ et une face perpendiculaire 17 du raidisseur 13, l'aile 18₁ et la face 17 du raidisseur 13 formant un dièdre 130. Le raidisseur 13 et le panneau 12 sont formés dans un matériau composite comportant des plis de fibres de carbone.

La figure 1bis présente une vue de coupe du raidisseur 13, centrée sur le congé 11. Le raidisseur 13 est constitué de plis 121 de renforts fibreux maintenus dans une matrice organique 124 en résine époxy. La matrice organique 124 forme des couches 122 d'épaisseur sensiblement uniforme autour de chaque pli 121. Une ondulation 123 est ici présente dans le congé 11. Ce type de déformation a tendance à apparaître car il est difficile d'imposer une tension aux fibres dans la zone mise en compression au moment de la polymérisation de la résine. La présence de cette ondulation 123, également appelée plissement, réduit localement la capacité de renfort des fibres et peut également entraîner une zone de concentration de contrainte voire une déformation localisée du raidisseur 13.

La présence de l'ondulation 123 se traduit par une variation localisée de l'épaisseur de résine entre la face externe du raidisseur 13 et le premier pli 121₁. Cet amas de résine, également appelé flash de résine, se détecte en mesurant les variations de l'épaisseur de résine le long du congé 11.

La figure 1ter représente une vue en perspective du dispositif de contrôle 10.

Le dispositif de contrôle 10 comprend un support 14 présentant deux plaques 141 identiques, sensiblement rectangulaires. Un berceau 145 logeant un capteur optique 15, coulisse longitudinalement entre les plaques 141, selon un axe médian 147 du support 14.

Une source laser 151 pulsée fonctionnant à une fréquence de 1 kHz fournit un faisceau lumineux cohérent se propageant jusqu'au capteur 15 par l'intermédiaire d'une fibre optique 152.

Le capteur 15 comprend en outre un objectif 153 et un miroir de balayage motorisé 154. Un écran de contrôle 155, relié à un système d'acquisition 156 logé dans le capteur 15, permet à un opérateur de visualiser en temps réel une coupe transversale 2D, également appelée B-SCAN, du congé 11. Un faisceau de fil 159 relie ainsi le capteur 15 à une alimentation 158 et à l'écran de contrôle 155. Il est à noter que la source laser 151, l'alimentation 158 du capteur 15 et l'écran de contrôle 155 sont déportés sur une table roulante (non représentée sur la figure 1). Cet ensemble de composant appartient ici à un dispositif de contrôle mettant en œuvre le capteur.

La longueur d'onde du laser 152 est avantageusement définie pour correspondre à un faible taux d'absorption de la lumière laser dans la résine époxy du congé 11. Par exemple une longueur d'onde comprise dans une plage de [800-2000] nanomètres est utilisée pour une résine époxyde. En outre, le contrôle du congé 11 est effectué avant la phase de peinture de la structure car les pigments utilisés peuvent diffuser la lumière à la longueur d'onde du laser choisie.

Le support 14, symétrique par rapport à l'axe médian 147 du support 14, comprend quatre pieds 16 s'étendant sur deux côtés du support 14. Deux pieds 16₁ reliés entre eux par deux traverses 19 sont destinés à venir prendre appui sur la surface extérieure 17 du raidisseur 13. Deux pieds 16₂ également reliés entre eux par deux traverses 110 sont quant à eux destinés à venir prendre appui sur l'aile 18₁ du panneau 12.

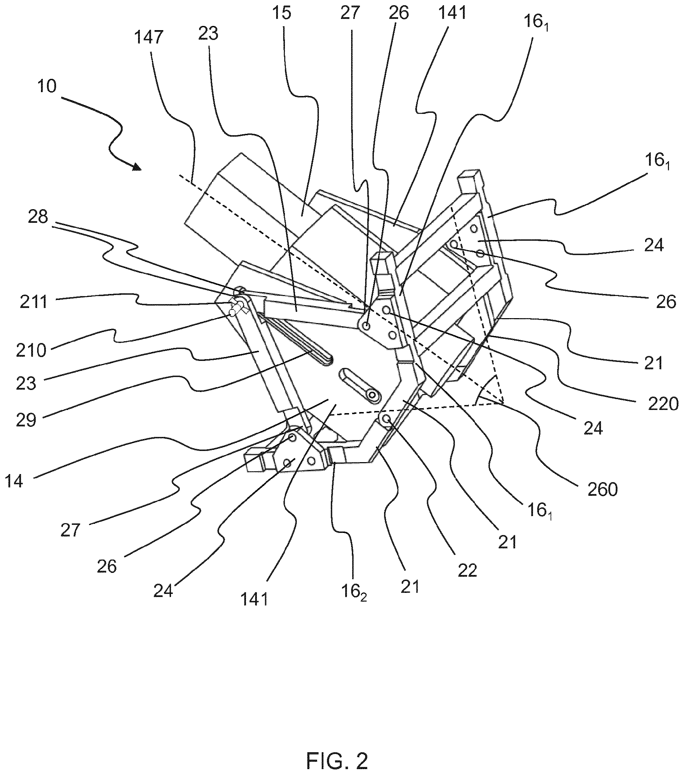

Comme le montre plus en détails la figure 2, chacun des quatre pieds 16 est relié à une plaque 141 du support 14 par l'intermédiaire d'une jambe 21. Les jambes 21 pivotent, deux à deux, symétriquement de chaque côté du support 14. Ainsi deux jambes 21 symétriques sont en liaison pivot autour d'un axe 22 perpendiculaire à la plaque 141, centré latéralement, à proximité du bord inférieur 220 de la plaque 141. Chaque jambe 21 forme en outre un angle sensiblement égal à 120° avec chaque pied 16.

Chacun des quatre pieds 16 est également relié au support 14 par un bras 23 en liaison pivot par rapport au pied 16 correspondant. Une plaque triangulaire 24 solidarisée à chaque pied 16 permet de légèrement excentrer l'axe 26 autour duquel pivote l'extrémité 27 du bras 23, par rapport au pied 16 correspondant.

L'extrémité opposée 28 de chacun des bras 23 est liée au support 14 par une liaison pivot glissant dans une glissière verticale 29 formée au travers des plaques 141 du support 14, sur sensiblement la moitié de la longueur des plaques 141.

A cet effet, une vis 210 jouant le rôle de pivot, glisse dans chaque glissière 29. Chaque vis 210 traverse la glissière 29 et les extrémités 28 de deux bras 23 symétriques par rapport au support 14. La tête ronde de la vis 210, située du côté du capteur 15, comprend un collet carré configuré pour empêcher la rotation de la tête de la vis 210 dans la glissière 29.

L'opérateur peut ainsi régler l'orientation des pieds 16 par rapport au support 14 et verrouiller leur position en serrant deux écrous papillons 211 vissés à l'extrémité libre des vis 210. A cet effet, l'opérateur peut plaquer le dispositif de contrôle 10 contre les deux faces du dièdre 130 à contrôler avant de verrouiller l'orientation des pieds 16. L'opérateur peut également choisir de régler et de verrouiller l'orientation des pieds 16 en dehors de la pièce à contrôler lorsque par exemple l'accès à la pièce est plus délicat.

L'angle formé entre l'axe médian 147 du support 14 et chacun des pieds 16 peut varier entre 40° et 90°, permettant ainsi au support 14 de s'adapter à différentes configurations de pièces. Il est à souligner que l'axe médian 147 du support 14 se confond avec la bissectrice de l'angle 260 formé entre les pieds 16.

Dans une variante de ce mode de réalisation particulier de l'invention, chacun des bras 23 comprend une suspension dans l'axe du bras 23. La suspension comprend une tige coulissant dans l'axe dudit bras et un ressort. Le dispositif 10 est ainsi adapté pour contrôler des pièces ayant des aspérités sur leur surface.

Dans une autre variante de ce mode de réalisation particulier de l'invention, un ressort comprimé est disposé de part et d'autre du support 14 selon un axe parallèle à l'axe médian 147, entre la liaison pivot glissant et le bord opposé au bord inférieur 220. Dans cette variante, l'angle 260 entre les pieds 16 est de 180° lorsque le dispositif est au repos, correspondant à une faible compression du ressort. Le dispositif est ainsi adapté pour contrôler des pièces comprenant un angle variable entre les deux faces. L'opérateur plaque en permanence le dispositif 10 contre les deux faces du raidisseur 13 afin d'effectuer son contrôle le long du congé 11.

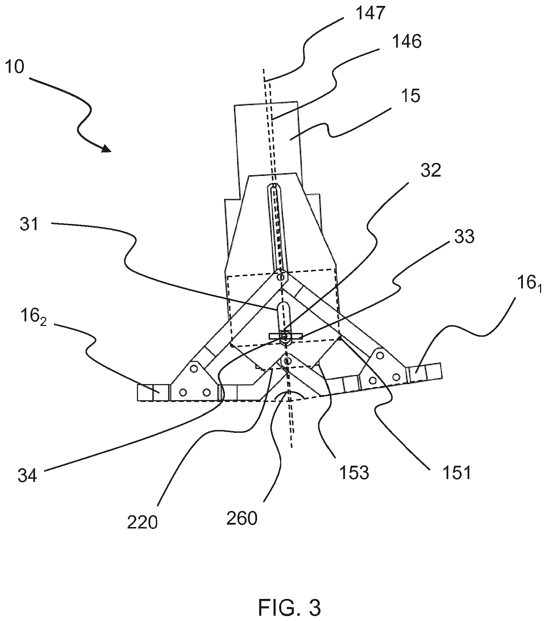

La figure 3 représente une vue du dispositif 10 où les pieds 16 sont sensiblement alignés selon le même plan, formant ainsi un angle 260 sensiblement égal à 180°.

Chacune des plaques 141 du support 14 comprend par ailleurs une deuxième glissière 31 dans laquelle est inséré un téton 32 se dressant en saillie sur la surface extérieure du berceau 145.

Ainsi, l'opérateur règle la distance entre l'objectif 153 du capteur 15 et le bord inférieur 220 du support 14 en faisant glisser le berceau 151 du capteur 15 dans le support 14 suivant l'axe médian 147.

Un alésage taraudé formé au centre de chaque téton 32 accueille une vis papillon 33 permettant de verrouiller la position du capteur 15 dans le support 14.

Les tétons 32 forment un axe de rotation 34 autour duquel le capteur 15 pivote. L'opérateur peut ainsi incliner l'axe optique 146 du capteur 15 par rapport à l'axe médian 147. Ce réglage permet d'atteindre des zones qui ne sont pas situées dans l'axe médian 147, notamment dans le cas où l'ouverture de l'objectif est faible. Par exemple, le capteur 15 comprenant un objectif d'ouverture 10° peut couvrir un champ de 30° en trois balayages en pivotant le capteur 15 autour de l'axe 34 selon trois inclinaisons formant respectivement un angle de -10°, 0°, +10° par rapport à l'axe médian 147.

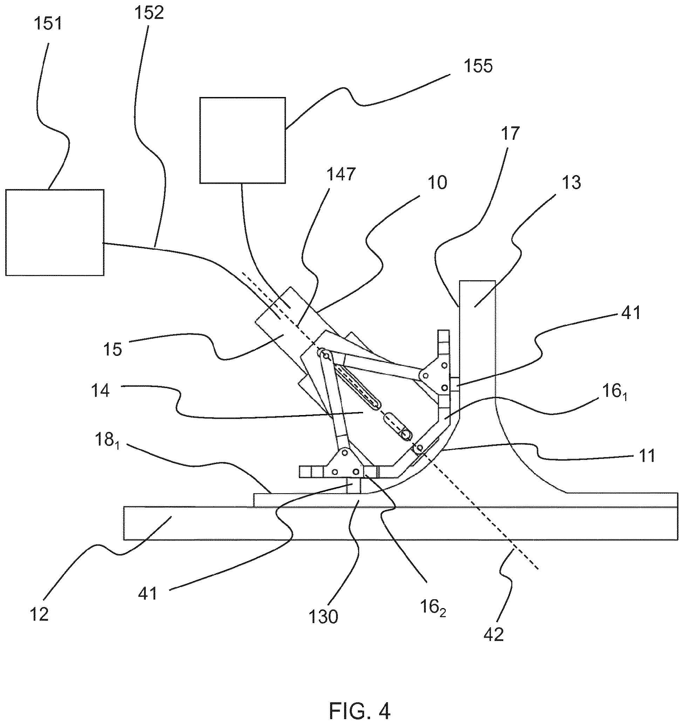

La figure 4 représente le dispositif 10 en contact avec l'aile 18₁ et la face 17 du raidisseur 13, formant les deux faces du dièdre 130. Un plan bissecteur 42 du dièdre 130 inclut le congé 11.

Le dispositif de contrôle 10 s'étendant symétriquement par rapport à l'axe médian 147 du support 14, l'axe médian 147 est sensiblement confondu avec le plan bissecteur 42 du dièdre 130.

La position du capteur 15 est configurée afin de placer le congé 11 à une distance sensiblement égale à 25 mm, compte tenu de la distance focale de l'objectif utilisé.

L'opérateur choisi avantageusement un objectif du capteur 15 en fonction de la profondeur de champ et de la taille du profil linéaire de la coupe 2D souhaités pour contrôler le congé 11.

Chaque pied 16 du support 14 comprend un patin 41 en polytétrafluoroéthylène (PTFE).

L'opérateur peut ainsi faire glisser facilement le support 14 simultanément sur les deux faces du dièdre 130 et obtenir une image 3D du congé 11 sur l'écran de contrôle 155.

Dans une variante de ce mode de réalisation particulier de l'invention, les patins 41 sont remplacés par des roues ou des galets permettant ainsi de faire rouler le support 14 le long du panneau 12 et du raidisseur 13.

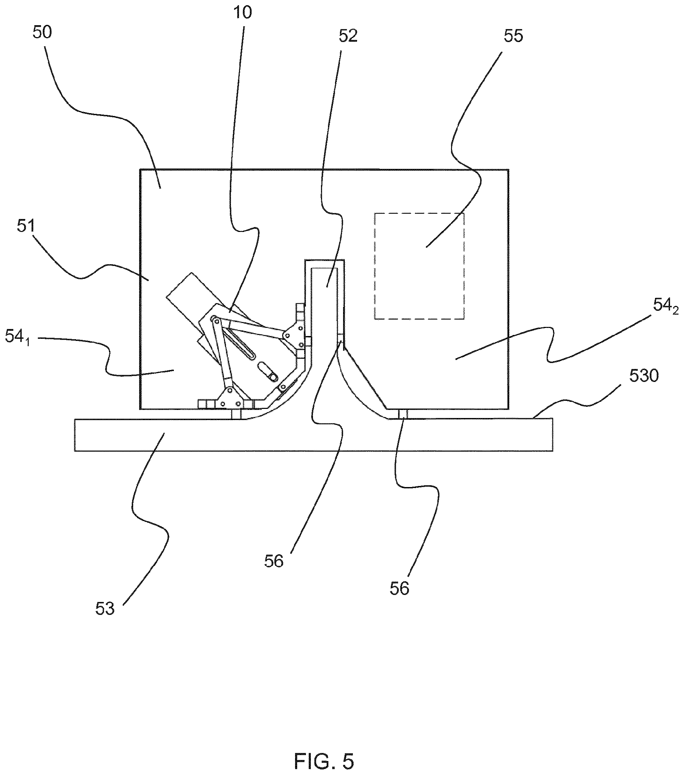

La figure 5 représente un dispositif automatisé 50 de contrôle non destructif par tomographie en cohérence optique (OCT) comprenant le dispositif de contrôle 10 logé dans un chariot 51 s'étendant de part et d'autre d'un raidisseur 52 d'une pièce 53 en matériau composite.

La forme du chariot 51 est configurée pour épouser sensiblement la forme du raidisseur 52 qui se dresse perpendiculairement à la surface plane 530 de la pièce 53. Le chariot 51 comprend ainsi deux compartiments 54 de chaque côté du raidisseur 52. L'un des compartiments 54₁ est configuré pour loger le dispositif de contrôle 10. Tandis que l'autre compartiment 54₂ loge un dispositif de commande 55 actionnant deux roues motorisées 56 présentées par le chariot 51.

Les deux roues 56 viennent prendre appui respectivement sur la surface extérieure 530 de la pièce 53 et sur la surface extérieure du raidisseur 52. Une des roues 56 comprend un codeur incrémental, ou un autre dispositif de mesure, permettant au dispositif de commande 55 de connaître la longueur du chemin parcouru par le chariot 51.

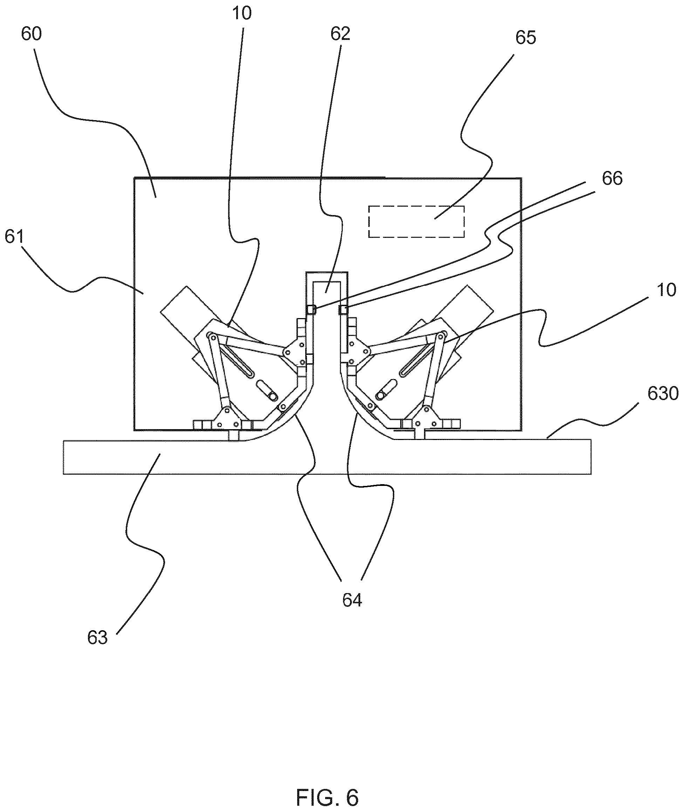

La figure 6 représente un autre mode de réalisation d'un dispositif automatisé 60 de contrôle non destructif par tomographie en cohérence optique (OCT) comprenant deux dispositifs de contrôle 10 logé dans un chariot 61 chevauchant un raidisseur 62 d'une pièce 63 en matériau composite.

Les deux dispositifs de contrôle 10 sont logés dans le chariot 61 de part et d'autre du raidisseur 62 qui se dresse perpendiculairement à la surface extérieure 630 de la pièce 63. Les dispositifs de contrôle 10 permettent de contrôler les deux congés 64 formés à la base du raidisseur 62.

Le chariot 61 comprend un dispositif de commande 65 actionnant deux roues holonomes 66 roulant de part et d'autre du raidisseur 62. Les roues 66 comprennent un codeur incrémental permettant de mesurer la distance parcourue.

## Revendications

1. Dispositif de contrôle non destructif (10) d'un congé (11 ; 64) d'une pièce (12 ; 53 ; 63) en matériaux composites comportant des fibres organisées en plis maintenus dans une matrice organique polymérisée, ladite pièce comprenant deux faces formant un dièdre (130), lesdites faces étant reliées par ledit congé, ledit dispositif de contrôle comprenant un capteur (15) de mesure par tomographie en cohérence optique (OCT), comprenant un axe optique (146) et un berceau (145) pour loger le capteur, edit capteur étant maintenu par un support (14) comprenant deux plaques (141), chacune des plaques comprenant une glissière (31), ledit support venant prendre appui simultanément sur les deux faces dudit dièdre, par des moyens d'appui, lors du contrôle dudit congé, ledit dispositif de contrôle comprenant également des moyens de réglage d'une distance (31, 32) d'un point de référence dudit capteur par rapport à un bord (220) dudit support, lesdits moyens de réglage de distance comprenant les glissières (31), dans chacune desquelles est inséré un téton (32) se dressant en saillie la surface externe du berceau, et des moyens de réglage d'une orientation (23, 29) desdits moyens d'appui par rapport audit support, et ledit support comprenant un ensemble de patins, ou de roues, destinés à glisser, ou à rouler, simultanément sur les deux faces dudit dièdre, ledit support s'étendant symétriquement par rapport à un axe médian (147) dudit support, ledit axe médian étant maintenu orienté sensiblement dans un plan bissecteur (42) dudit dièdre lors du contrôle dudit congé, **caractérisé en ce que** ledit capteur pivote dans ledit support autour d'un axe de rotation (34), perpendiculaire audit axe médian et formé par lesdits tétons, l'axe optique dudit capteur formant un angle avec un plan bissecteur dudit dièdre lors du contrôle dudit congé, **en ce que** lesdits moyens d'appui comprennent deux pieds (16) reliés chacun audit support par une jambe (21) en liaison pivot par rapport audit support, et **en ce que** lesdits moyens de réglage d'une orientation desdits moyens d'appui comprennent des moyens de réglage d'une orientation desdits pieds par rapport audit support.

2. Dispositif de contrôle selon la revendication 1, **caractérisé en ce que** lesdits moyens de réglage de ladite distance s'effectuent par glissement dudit capteur par rapport audit support suivant ledit axe médian.

3. Dispositif de contrôle selon l'une quelconque des revendications 1 et 2, **caractérisé en ce qu'**il comprend des moyens de verrouillage dudit capteur (33) sur ledit support.

4. Dispositif de contrôle selon l'une quelconque des revendications 1 à 3, **caractérisé en ce que** l'orientation de chacun desdits pieds est réglée par un bras (23) en liaison pivot par rapport audit pied et en liaison pivot glissant par rapport audit support.

5. Dispositif de contrôle selon la revendication 4, **caractérisé en ce que** chacun desdits bras comprend une suspension.

6. Dispositif de contrôle selon l'une quelconque des revendications 1 à 5, **caractérisé en ce que** chacun desdits pieds forme un angle compris entre 40° et 90° avec ledit axe médian.

7. Dispositif de contrôle selon l'une quelconque des revendications 1 à 6, **caractérisé en ce qu'**il comprend des moyens de verrouillage desdits moyens d'appui (210, 211) par rapport audit support.

8. Dispositif de contrôle selon l'une quelconque des revendications 1 à 7, **caractérisé en ce que** lesdits pieds comprennent les moyens destinés à glisser ou à rouler sur les deux faces dudit dièdre.

9. Dispositif de contrôle selon la revendication 8, **caractérisé en ce que** lesdits moyens de glissement comprennent des patins (41).

10. Dispositif de contrôle selon l'une quelconque des revendications 1 à 7, **caractérisé en ce que** lesdits pieds comprennent les moyens destinés à rouler sur les deux faces dudit dièdre.

11. Dispositif automatique de contrôle non destructif (50, 60) **caractérisé en ce qu'**il comprend au moins un dispositif de contrôle non destructif selon l'une quelconque des revendications 1 à 10, logé dans un chariot (51, 61) comprenant des moyens automatisés de déplacement le long d'un raidisseur d'une pièce composite, ledit chariot chevauchant ledit raidisseur.

## Patentansprüche

1. Vorrichtung zur nicht destruktiven Kontrolle (10) einer Kehle (11; 64) eines Teils (12; 53; 63) aus Verbundmaterialien aufweisend Fasern, die in Lagen organisiert sind, die in einer polymerisierten organischen Matrix gehalten sind, wobei das Teil zwei Flächen umfasst, die einen Dieder (130) bilden, wobei die Flächen durch die Kehle verbunden sind, die Kontrollvorrichtung umfassend einen Sensor (15) zur Messung durch optische Kohärenztomografie (OCT), umfassend eine optische Achse (146) und einen Halter (145) zur Aufnahme des Sensors, wobei der Sensor durch einen Träger (14) gehalten wird, der zwei Platten (141) umfasst, wobei jede der Platten eine Gleitführung (31) umfasst, wobei der Träger bei der Kontrolle der Kehle durch Auflagemittel gleichzeitig auf den zwei Flächen des Dieders in Auflage kommt, wobei die Kontrollvorrichtung ebenfalls Mittel zum Einstellen eines Abstands (31, 32) von einem Bezugspunkt des Sensors bezogen auf eine Kante (220) des Trägers umfasst, die Abstandseinstellmittel umfassend die Gleitführungen (31), in welche jeweils ein Ansatz (32) eingesetzt ist, der sich der Außenfläche des Halters hervorstehend erhebt, und Mittel zum Einstellen einer Ausrichtung (23, 29) der Auflagemittel bezogen auf den Träger, und der Träger umfassend eine Anordnung von Kufen oder Rädern, die dazu bestimmt sind, gleichzeitig auf den zwei Flächen des Dieders zu gleiten oder zu rollen, wobei sich der Träger symmetrisch bezogen auf eine Mittelachse (147) des Trägers erstreckt, die Mittelachse bei der Kontrolle der Kehle im Wesentlichen in einer winkelhalbierenden Ebene (42) des Dieders ausgerichtet gehalten wird, **dadurch gekennzeichnet, dass** der Sensor im Träger um eine Drehachse (34) schwenkt, die senkrecht zur Mittelachse verläuft und von den Ansätzen gebildet ist, wobei die optische Achse des Sensors bei der Kontrolle der Kehle einen Winkel mit einer winkelhalbierenden Ebene des Dieders bildet, dadurch, dass die Auflagemittel zwei Füße (16) umfassen, die jeweils durch ein Bein (21) in Schwenkverbindung bezogen auf den Träger mit dem Träger verbunden sind, und dadurch, dass die Mittel zum Einstellen einer Ausrichtung der Auflagemittel Mittel zum Einstellen einer Ausrichtung der Füße bezogen auf den Träger umfassen.

2. Kontrollvorrichtung nach Anspruch 1, **dadurch gekennzeichnet, dass** die Mittel zum Einstellen des Abstands durch Gleiten des Sensors bezogen auf den Träger gemäß der Mittelachse erfolgen.

3. Kontrollvorrichtung nach einem der Ansprüche 1 und 2, **dadurch gekennzeichnet, dass** sie Mittel zur Verriegelung des Sensors (33) auf dem Träger umfasst.

4. Kontrollvorrichtung nach einem der Ansprüche 1 bis 3, **dadurch gekennzeichnet, dass** die Ausrichtung jeder der Füße von einem Arm (23) in Schwenkverbindung bezogen auf den Fuß und in Gleitschwenkverbindung bezogen auf den Träger eingestellt wird.

5. Kontrollvorrichtung nach Anspruch 4, **dadurch gekennzeichnet, dass** jeder der Arme eine Aufhängung umfasst.

6. Kontrollvorrichtung nach einem der Ansprüche 1 bis 5, **dadurch gekennzeichnet, dass** jeder der Füße einen Winkel zwischen 40° und 90° mit der Mittelachse bildet.

7. Kontrollvorrichtung nach einem der Ansprüche 1 bis 6, **dadurch gekennzeichnet, dass** sie Mittel zur Verriegelung der Auflagemittel (210, 211) bezogen auf den Träger umfasst.

8. Kontrollvorrichtung nach einem der Ansprüche 1 bis 7, **dadurch gekennzeichnet, dass** die Füße Mittel umfassen, die dazu bestimmt sind, auf den zwei Flächen des Dieders zu gleiten oder zu rollen.

9. Kontrollvorrichtung nach Anspruch 8, **dadurch gekennzeichnet, dass** die Gleitmittel Kufen (41) umfassen.

10. Kontrollvorrichtung nach einem der Ansprüche 1 bis 7, **dadurch gekennzeichnet, dass** die Füße Mittel umfassen, die dazu bestimmt sind, auf den zwei Flächen des Dieders zu rollen.

11. Automatische Vorrichtung zur nicht destruktiven Kontrolle (50, 60), **dadurch gekennzeichnet, dass** sie mindestens eine Vorrichtung zur nicht destruktiven Kontrolle nach einem der Ansprüche 1 bis 10 umfasst, die in einem Schlitten (51, 61) aufgenommen ist, der automatische Mittel zur Bewegung entlang einer Versteifung eines Verbundteils umfasst, wobei sich der Schlitten rittlings auf der Versteifung befindet.

## Claims

1. Device for the non-destructive inspection (10) of a fillet (11; 64) of a part (12; 53; 63) made of composite materials comprising fibres organized in plies held in a polymerized organic matrix, said part comprising two faces forming a dihedron (130), said faces being linked by said fillet, said inspection device comprising a sensor (15) for measuring by optical coherence tomography (OCT), comprising an optical axis (146) and a cradle (145) for housing the sensor, said sensor being held by a support (14) comprising two plates (141), each of the plates comprising a guideway (31), said support coming to bear simultaneously on the two faces of said dihedron, by bearing means, when inspecting said fillet, said inspection device also comprising means for setting a distance (31, 32) from a reference point of said sensor with respect to an edge (220) of said support, said distance setting means comprising guideways (31), in each of which there is inserted a pilot point (32) protruding from the outer surface of the cradle, and means for setting an orientation (23, 29) of said bearing means with respect to said support, and said support comprising a set of skids, or wheels, intended to slide, or roll, simultaneously on the two faces of said dihedron, said support extending symmetrically with respect to a median axis (147) of said support, said median axis being kept oriented substantially in a bisector plane (42) of said dihedron when inspecting said fillet, **characterized in that** said sensor pivots in said support about an axis of rotation (34), at right angles to said median axis and formed by said pilot points, the optical axis of said sensor forming an angle with a bisector plane of said dihedron when inspecting said fillet, **in that** said bearing means comprise two feet (16) each linked to said support by a leg (21) pivotably linked with respect to said support, and **in that** said means for setting an orientation of said bearing means comprise means for setting an orientation of said feet with respect to said support.

2. Inspection device according to Claim 1, **characterized in that** said means for setting said distance are effected by sliding said sensor with respect to said support along said median axis.

3. Inspection device according to either one of Claims 1 and 2, **characterized in that** it comprises means for locking said sensor (33) on said support.

4. Inspection device according to any one of Claims 1 to 3, **characterized in that** the orientation of each of said feet is set by an arm (23) pivotably linked with respect to said foot and pivotably linked slidingly with respect to said support.

5. Inspection device according to Claim 4, **characterized in that** each of said arms comprises a suspension.

6. Inspection device according to any one of Claims 1 to 5, **characterized in that** each of said feet forms an angle of between 40° and 90° with said median axis.

7. Inspection device according to any one of Claims 1 to 6, **characterized in that** it comprises means for locking said bearing means (210, 211) with respect to said support.

8. Inspection device according to any one of Claims 1 to 7, **characterized in that** said feet comprise means intended to slide or roll on the two faces of said dihedron.

9. Inspection device according to Claim 8, **characterized in that** said sliding means comprise skids (41).

10. Inspection device according to any one of Claims 1 to 7, **characterized in that** said feet comprise the means intended to roll on the two faces of said dihedron.

11. Automatic non-destructive inspection device (50, 60), **characterized in that** it comprises at least one non-destructive inspection device according to any one of Claims 1 to 10, housed in a carriage (51, 61) comprising automated means for moving along a stiffener of a composite part, said carriage straddling said stiffener.
